# EUROPÄISCHE PATENTANMELDUNG

(11) **EP 4 749 854 A1**
(43) Veröffentlichungstag der Anmeldung: **27.05.2026**
(21) Anmeldenummer: 24215073.8
(22) Anmeldetag: 25.11.2024
(51) Int. Cl.: H02G 3/12, H02G 3/10

(54) **ANORDNUNG EINES KABELKANALS UND EINER BEFESTIGUNGSKLAMMER SOWIE BEFESTIGUNGSKLAMMER**

(71) Anmelder: OBO Bettermann Produktion Deutschland GmbH & Co.KG, 58710 Menden (DE)
(72) Erfinder: Kutschelis, Kevin, 58675 Hemer (DE)
(74) Vertreter: Haverkamp Patentanwälte PartG mbB

(57) **Zusammenfassung**

Die Erfindung betrifft eine Anordnung 1 eines zwei Seitenwände 4, 5 und einen Boden 6 aufweisenden Kabelkanals 2 und einer zwischen den Seitenwänden 4, 5 des Kabelkanals 2 an dem Kabelkanal 2 befestigten Befestigungsklammer 3, wobei die Befestigungsklammer 3 einen Montagegrund 23 für weitere Installationskomponenten, etwa einen Kleinverteiler, bildet, wobei die Seitenwände 4, 5 und der Boden 6 des Kabelkanals 2 einen Aufnahmeraum 7 einfasst, in dem in Längserstreckungsrichtung des Kabelkanals 2 führende Leitungen aufnehmbar sind, und einen in diesen Aufnahmeraum 7 hineinragenden Klemmflansch 14 aufweist, wobei die Befestigungsklammer 3 eine Klemme umfasst, die ein gegen den Kabelkanal 2 wirkendes Grundlager 8 und einen gegenüber dem Grundlager 8 beweglich gehaltenen Klemmhebel 9 aufweist, wobei der Klemmhebel 9 durch ein Spannelement 11 von einer Montageposition in eine Klemmposition verstellbar ist, in der der Klemmhebel 9 auf den Klemmflansch 14 wirkt, sodass zwischen Klemmhebel 9 und Klemmflansch 14 ein Kraftschluss vorliegt und die Befestigungsklammer 3 fest mit dem Kabelkanal 2 verbunden ist.

## Beschreibung

Die Erfindung betrifft eine Anordnung eines zwei Seitenwände und einen Boden aufweisenden Kabelkanals und einer zwischen den Seitenwänden des Kabelkanals an dem Kabelkanal befestigten Befestigungsklammer, wobei die Befestigungsklammer einen Montagegrund für weitere Installationskomponenten, etwa einen Kleinverteiler, bildet.

Kabelkanäle dienen der Installation von Leitungen, üblicherweise Daten- und Stromkabeln. Ein Kabelkanal umfasst einen Boden sowie Seitenwände, sodass durch den Kabelkanal ein Aufnahmeraum eingefasst ist. In dem Aufnahmeraum werden Leitungen verlegt bzw. in diesen eingelegt und üblicherweise am Boden des Kabelkanals befestigt. Abschließend wird der Kabelkanal oberseitig mit einem Deckelteil verschlossen. Ein solcher Kabelkanal kann als Wandkabelkanal ausgestaltet sein und wird dann üblicherweise auf einer Wand in einer Aufputzkonfiguration montiert.

Mitunter ist gewünscht, dass entlang eines Kabelkanals Applikationen montiert werden, die an die in dem Kabelkanal verlegten Leitungen angeschlossen werden. Zum Anschließen einer solchen Applikation sind weitere Installationselemente notwendig, etwa ein an dem Kabelkanal montierter Kleinverteiler, sodass ein oder mehrere Leitungen aus dem Kabelkanal herausgeführt werden können und/oder dass Schnittstellen, etwa Steckdosen, bereitgestellt werden können und/oder dass Schaltelemente, etwa Sicherungen, in die Leitungen eingeschaltet werden können.

Zur Installation solcher Applikationen macht man sich zu Nutze, dass der Kabelkanal bereits montiert ist und Installationsmaterial nicht separat, etwa an der Wand, befestigt werden muss, um die Applikationen zu halten. Zudem vereinfacht eine unmittelbare Montage von weiterem Installationsmaterial an dem Kabelkanal die Leitungsführung, da im Bereich des Installationsmaterials ein etwaiger Deckel schlichtweg ausgespart werden kann und die Abdeckfunktion des Deckels durch das Installationsmaterial übernommen wird.

Zur Befestigung von Installationselementen an dem Kabelkanal wird ein Einsatz genutzt, der an dem Kabelkanal befestigt wird. Dieser Einsatz bietet einen Montagegrund für die weiteren Installationskomponenten.

So offenbart WO 2009 / 085 790 A1 als Einsatz eine auf einen Kabelkanal aufsetzbare Blende mit entsprechenden Ausschnitten für Steckdosen. Die Blende wird anstatt eines Deckels in seitenwandseitige Längsnuten eingesetzt.

EP 0 600 109 A1 offenbart einen als Aufsatz ausgebildeten Einsatz, der auf den oberen Abschluss der Seitenwände eines Kabelkanals aufgesetzt wird. Der Aufsatz greift ebenfalls in Längsnuten der kabelkanalseitigen Seitenwände ein.

Vorteilhaft bei solchen Ausgestaltungen ist es, dass der Einsatz entlang der Längserstreckung des Kabelkanals verschiebbar gehalten sind, so dass eine genaue Platzierung der zusätzlichen Applikation möglich ist. Nachteilig ist jedoch gleichzeitig, dass insbesondere bei einer Vertikalmontage des Kabelkanals ein solcher Einsatz entlang des Kabelkanals hinabrutschen kann. In den genannten Schriften wird der Einsatz in solchen Fällen lediglich durch ein auf den Kabelkanal aufgesetztes Deckelteil abgestützt, so dass diese Abstützung entfällt, sobald der Kabelkanal geöffnet wird. Dies ist regelmäßig während der Montage jedoch der Fall.

Vor diesem Hintergrund stellt sich die Erfindung die Aufgabe, eine Anordnung eines Kabelkanals und einer Befestigungsklammer anzugeben, deren Verbindung tragfähiger als im Stand der Technik ist. Zudem ist es Aufgabe der Erfindung, eine entsprechende Befestigungsklammer anzugeben.

Gelöst wird die anordnungsbezogene Aufgabe durch eine eingangs genannte, gattungsgemäße Anordnung mit den Merkmalen des Anspruchs 1. Die befestigungsklammerbezogene Aufgabe wird gelöst durch eine entsprechende Befestigungsklammer mit den Merkmalen des Anspruchs 10.

Vorteilhafte Ausgestaltungen ergeben sich aus den abhängigen Ansprüchen und der Beschreibung.

Gemäß der Erfindung ist vorgesehen, dass der Kabelkanal einen in den durch die Seitenwände und den Boden eingefassten Aufnahmeraum hineinragenden Klemmflansch aufweist. Der Klemmflansch erstreckt sich in Längserstreckungsrichtung des Kabelkanals und ist üblicherweise an der Seitenwand angeschlossen; er ragt somit von der Seitenwand rippenförmig in den Aufnahmeraum hinein.

Der im Stand der Technik eingesetzte Einsatz ist gemäß der Erfindung als Befestigungsklammer ausgebildet und weist eine zu dem Klemmflansch komplementäre Klemme auf. Die Klemme umfasst hierfür ein gegen den Kabelkanal wirkendes Grundlager, um sich gegen den Kabelkanal, respektive den Klemmflansch mit einem zu dem Kabelkanal entsprechenden Lagerabschnitt abzustützen. Ferner umfasst die Klemme einen gegenüber dem Grundlager beweglich gehaltenen Klemmhebel. Der Klemmhebel kann durch ein Spannelement von einer Montageposition in eine auf den Klemmflansch wirkende Klemmposition verstellt werden. Das bedeutet, dass in der Montageposition der Klemmhebel in einer Position gehalten ist, in der die Befestigungsklammer in den Kabelkanal einsetzbar und damit montierbar ist. Erst durch eine Verstellung des Klemmhebels durch das Spannelement wird klemmenartig zwischen Klemmhebel und Klemmflansch ein Kraftschluss gebildet. Im Ergebnis ist die Befestigungsklammer fest mit dem Kabelkanal verbunden, und zwar insbesondere dergestalt, dass keine Verschieblichkeit mehr in Längserstreckungsrichtung des Kabelkanals gegeben ist.

Durch diese Anordnung, respektive die Befestigungsklammer, wird ein Montagegrund bereitgestellt, der an einem Kabelkanal vielfältig einsetzbar ist und auf dem in sicherer Art und Weise weitere Installationskomponenten befestigbar sind.

Üblicherweise ist der Kabelkanal gegenüberliegend zum Boden hin geöffnet. Die Befestigungsklammer überspannt bevorzugt die Öffnung zwischen den Seitenwänden, so dass sie einen Montagegrund in Richtung der Öffnung bereitstellt. Üblicherweise ist vorgesehen, dass die Befestigungsklammer mit ihrem Montagegrund im Wesentlichen bündig mit dem zu der Öffnung weisenden Ende der Seitenwände des Kabelkanals abschließt oder daraus hervorragt. Auf diese Weise kann eine Installationskomponente, etwa ein Verteilerkasten, auf den Kabelkanal aufgesetzt werden und damit auch über die Breite des Kabelkanals hinausragen.

Bevorzugt ist vorgesehen, dass für eine Vormontage der Befestigungsklammer an dem Kabelkanal die Befestigungsklammer über zumindest eine Rastkomponente, etwa eine Rastnase, verfügt, die mit einer kabelkanalseitigen, komplementären Rastkomponente, etwa einer Rastleiste, zusammenwirkt, wobei die geometrische Ausgestaltung der beiden komplementären Rastkomponenten eine gegenseitige Längsverschiebung entlang der Längserstreckungsrichtung des Kabelkanals erlaubt. Die Rastkomponenten dienen dem Zweck des Haltens der Befestigungsklammer quer zur Längserstreckungsrichtung des Kabelkanals. Auf diese Weise ist die Befestigungsklammer bereits geführt gehalten. Es kann durchaus vorgesehen sein, dass die Rastkomponenten dergestalt ausgebildet sind, dass eine gewisse Reibung zwischen den beiden Rastkomponenten herrscht, die ein manuelles Verschieben der Befestigungsklammer gegenüber dem Kabelkanal zwar erschwert, aber nicht vollends verhindert. Die Rastkomponenten sind in ihrer Form in Längsrichtung des Kabelkanals damit gleitfähig, während quer hierzu Verankerungsflächen vorgesehen sind. Hierdurch wird bewirkt, dass während der Vormontage die Befestigungsklammer an dem Kabelkanal in Längsrichtung des Kabelkanals verschieblich ist, gleichzeitig an einer vorgesehenen Position, wenn eingestellt, zusätzlich mit dem Kabelkanal fest verbunden werden kann, indem der Klemmhebel in seine Klemmposition verbracht wird. Dies vereinfacht die Montage insgesamt.

Die befestigungsklammerseitige Rastkomponente kann am Klemmhebel, jedoch bevorzugt am Grundlager angeordnet sein.

Zur einfachen Einführung der Befestigungsklammer in den Kabelkanal kann vorgesehen sein, dass der Klemmhebel im Auslieferungszustand in seiner Montageposition durch eine lösbare Sicherung, bevorzugt formschlüssig, gegenüber dem Grundlager gehalten ist. Zum Verbringen des Klemmhebels in seine Klemmposition muss zunächst die Sicherung gelöst werden. Die Lösung der Sicherung erfolgt üblicherweise durch die Verstellung des Klemmhebels durch das Spannelement. Ferner ist insbesondere vorgesehen, dass der Kraftaufwand zur Lösung der Sicherung wesentlich geringer ist als zum Festklemmen der Befestigungsklammer gegenüber dem Klemmflansch.

Die Sicherung kann etwa als Rastung ausgebildet sein. So kann etwa an dem Grundlager eine Wölbung vorgesehen sein, während an dem Rasthebel eine komplementäre Ausnehmung oder Einwölbung vorgesehen ist.

Es kann vorgesehen sein, dass der Klemmhebel gegenüber dem Grundlager verschwenkbar gehalten ist, etwa dergestalt, dass der Klemmhebel mit seinem einen distalen Ende auf den Klemmflansch wirken kann und an seinem anderen distalen Ende, jedenfalls auf der anderen Seite des Schwenklagers, gegenüber dem Grundlager über das Spannelement gespannt wird. Die Verstellbewegung des Klemmhebels ist somit wippenartig und damit besonders intuitiv zu bedienen.

Das Spannelement ist bevorzugt jedenfalls in der Klemmposition selbsthemmend. Das bedeutet, dass das Spannelement aus sich selbst heraus eine entgegen der Klemmrichtung weisende Bewegung des Klemmhebels selbsthemmend verhindert. Wenngleich grundsätzlich vorgesehen sein kann, dass das Spannelement als Feder ausgestaltet ist, so ist bevorzugt der Einsatz einer Schraube mit einem selbsthemmenden Gewinde vorgesehen. Zudem ist die auf den Klemmhebel aufgebrachte Kraft auf diese Weise frei einstellbar und zudem unproblematisch wieder lösbar.

Der Kraftschluss zwischen Klemmhebel und Klemmflansch kann reibschlüssig und/oder formschlüssig sein. Ein Formschluss ist bevorzugt. So kann der Klemmflansch beispielsweise über eine Riffelung verfügen, in die der Klemmhebel mit einer komplementären Geometrie eingreifen kann. Ferner kann vorgesehen sein, dass der Klemmhebel über eine Schneide verfügt, mit der der Klemmhebel in den Klemmflansch abschnittsweise einschneidet und so ein Formschluss gebildet wird. Damit ist eine stufenlose Positionierung der Befestigungsklemme gegenüber dem Kabelkanal möglich.

Der Klemmflansch kann zur Erhöhung des Widerstandsmomentes gegenüber dem Klemmhebel dergestalt in seinem Querschnitt ausgebildet sein, dass ein Anteil des Klemmflansches entgegen der Klemmrichtung weist. Ragt der Klemmflansch von der Seitenwand des Kabelkanals ab, kann dieser etwa zu dem auf den Klemmflansch wirkenden Abschnitt des Klemmhebels hinweisend gerundet sein, sodass die Stirnfläche des Klemmflansches zu dem auf den Klemmflansch wirkenden Abschnitt des Klemmhebels weist. Durch diese Querschnittsgeometrie wird der Klemmflansch selbst stabilisiert und stabilisiert darüber hinaus auch die Seitenwand des Kabelkanals.

Bevorzugt ist vorgesehen, dass der Flansch im Bereich des freien Endes der Seitenwand angeordnet ist und sich die Befestigungsklammer im Bereich des freien Endes der Seitenwand abstützt. Auf diese Weise kann die Befestigungsklammer auch nach dem Verlegen der Leitungen in dem Kabelkanal in diesen bzw. auf diesen aufgesetzt werden.

Bevorzugt ist vorgesehen, dass der Montagegrund am Grundlager vorgesehen ist.

In einer diesbezüglichen Weiterbildung ist vorgesehen, dass der Montagegrund auf der dem Boden des Kabelkanals abgewandten Seite der Befestigungsklammer und der Klemmhebel auf der dem Boden zugewandten Seite angeordnet ist. Auf diese Weise kann ein im Wesentlichen ebener Montagegrund für eine universelle Einsetzbarkeit desselben vorgesehen werden. Der Klemmhebel dagegen ist dann gegenüber dem Grundlager in den Aufnahmeraum des Kabelkanals hineinversetzt.

In einer diesbezüglichen Weiterbildung ist vorgesehen, dass der Klemmhebel den Klemmflansch hintergreift. Das bedeutet, dass der Klemmflansch durch den Klemmhebel in der Klemmposition von dem Boden weggedrückt wird.

Bevorzugt ist vorgesehen, dass die Befestigungsklammer an ihren beiden gegenüberliegenden, zu den Seitenwänden des Kabelkanals weisenden Enden jeweils eine Klemme aufweist, wie sie vorstehend beschrieben ist, und wobei der Kabelkanal an komplementären Positionen jeweils einen Klemmflansch aufweist. Das bedeutet, dass die Befestigungsklammer üblicherweise über ein gemeinsames Grundlager mit zwei Lagerabschnitten und zwei Klemmhebeln, die von einer Montageposition in eine Klemmposition bewegbar sind, verfügt. Auf diese Weise ist eine Abstützung der Befestigungsklammer an den beiden gegenüberliegenden Seitenwänden des Kabelkanals möglich. Hierdurch wird auch der Kabelkanal an der Position der Befestigungsklemme und damit an einer Position, an der ohnehin erhöhte Kräfte in den Kabelkanal eingeleitet werden, zusätzlich ausgesteift.

Die Erfindung wird anhand der beiliegenden Figuren näher erläutert. Es zeigen:
- **Fig. 1:**: eine perspektivische Ansicht in einen Kabelkanal mit eingesetzter Befestigungsklammer, deren Klemmhebel in der Montageposition sind,
- **Fig. 2:**: eine zu Figur 1 geschnittene Ansicht der Befestigungsklemme und des Kabelkanals,
- **Fig. 3:**: die Ansicht der Figur 1, wobei die Klemmhebel der Befestigungsklammer in der Klemmposition sind und
- **Fig. 4:**: eine geschnittene Ansicht des Kabelkanals und der Befestigungsklemme aus Figur 3.

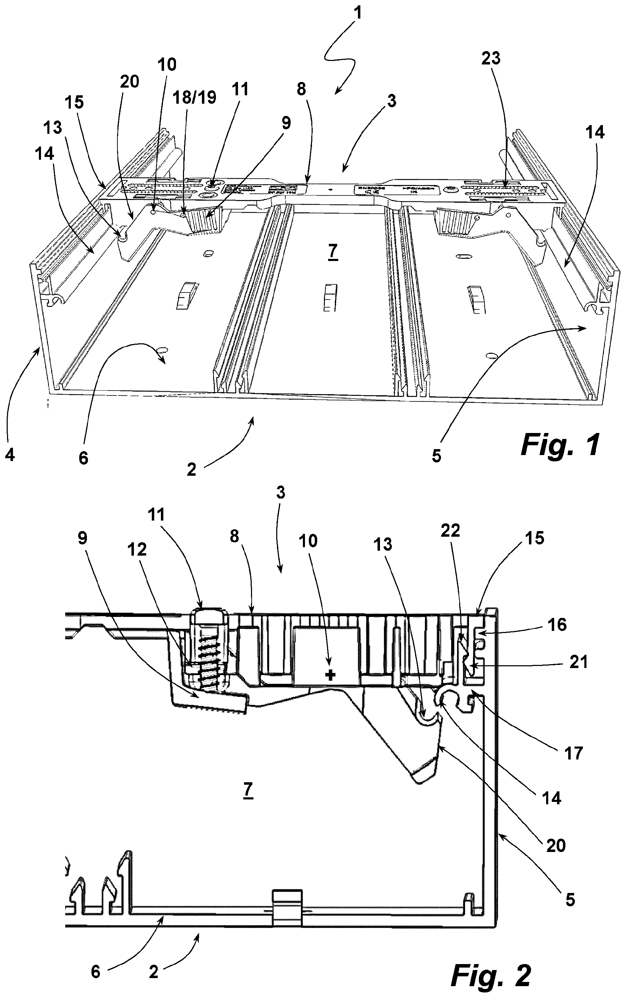

Die Figuren 1 bis 4 zeigen jeweils eine Anordnung 1, umfassend einen Kabelkanal 2 sowie eine Befestigungsklammer 3. Der Kabelkanal 2 umfasst zwei Seitenwände 4, 5 sowie einen Boden 6. Die Seitenwände 4, 5 sowie der Boden 6 fassen einen Aufnahmeraum 7 ein. Der Kabelkanal 2 ist gegenüber dem Boden 6 offen ausgestaltet, sodass von dieser Seite Leitungen in den Aufnahmeraum 7 eingesetzt und darin montiert werden können.

Jeweils ein kabelkanalseitiger Klemmflansch 14 ist an den beiden Seitenwänden 4, 5 angeschlossen und ragt von diesen jeweils in den Aufnahmeraum 7 hinein.

An dem Kabelkanal 2, respektive an den Seitenwänden 4, 5 ist eine Befestigungsklammer 3 befestigt. Sie überspannt die dem Boden 6 des Kabelkanals 2 gegenüberliegende Öffnung des Kabelkanals 2 und ist im Bereich der freien, von dem Boden 6 wegweisenden Enden der Seitenwände 4, 5 angeordnet.

Die Befestigungsklammer 3 weist ein Grundlager 8 sowie zwei Klemmhebel 9 auf. Die Klemmhebel 9 sind gegenüberliegend, an den zu den Seitenwänden 4, 5 des Kabelkanals 2 weisenden Enden der Befestigungsklammer 3 angeordnet und gleich aufgebaut. Daher gelten die Ausführungen für den einen Klemmhebel 9 genauso wie für den anderen, weshalb auch identische Bezugszeichen genutzt werden.

Beide Klemmhebel 9 sind gegenüber dem Grundlager 8 um jeweils eine Schwenkachse 10 verschwenkbar. Sie hintergreifen jeweils den Klemmflansch 14.

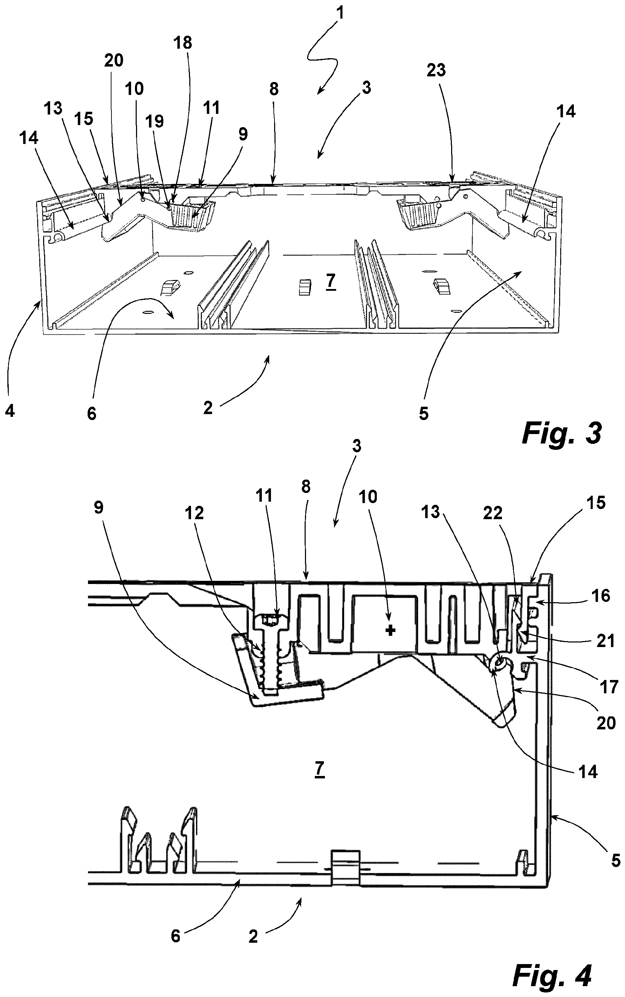

Unter Bezugnahme auf die in Figur 2 dargestellte Schnittansicht wird die Funktionsweise der Befestigungsklammer 3 näher erläutert. Die Figuren 2 und 4 zeigen jeweils den rechten Ausschnitt der Figuren 1 und 3. Auf der linken Seite ist die Anordnung 1 spiegelbildlich aufgebaut, so dass Entsprechendes auch für die nicht dargestellte Seite der Befestigungsklammer 3 gilt.

Die Befestigungsklammer 3 verfügt über ein Spannelement 11, hier in Form einer Schraube. Diese ist gegenüber dem Grundlager 8 abgestützt, indem sie in einem Gewindebuchsenabschnitt 12 mit diesem formschlüssig verbunden ist. Durch ein Einschrauben des Spannelementes 11 in das Grundlager 8 hinein wird auf den in den Figuren 1 und 2 in seiner Montageposition dargestellten Klemmhebel 9 eine Kraft ausgeübt, so dass aufgrund seiner Lagerung um die Schwenkachse 10 dieser in seine in den Figuren 3 und 4 dargestellten Klemmposition verschwenkt wird. In der Klemmposition wirkt, hier: drückt, der Klemmhebel 9 mit seinem auf den Klemmflansch 14 wirkenden Abschnitt, hier als Schneide 13 ausgebildet, auf den Klemmflansch 14 sodass ein Kraftschluss zwischen Klemmhebel 9 und Klemmflansch 14 entsteht.

Als Gegenlager für den Klemmhebel 9 ist das Grundlager 8 dergestalt ausgestaltet, dass es sich ebenfalls an der Seitenwand 5 des Kabelkanals 2 mit einem Lagerabschnitt 15 an einem seitenwandseitigen Abstützfortsatz 16 abstützt. Der Klemmflansch 14 ist über einen Steg 17 mit der Seitenwand 5 verbunden, an dem ebenfalls der Abstützfortsatz 16 vorliegt. Die Befestigungsklammer 3 klemmt somit den Klemmflansch 14 sowie den Abstützfortsatz 16 mit dem grundlagerseitigen Lagerabschnitt 15 und dem Klemmhebel 9, respektive seinem auf den Klemmflansch 14 wirkenden Abschnitt desselben, hier der Schneide 13, von außen ein.

Mit Blick auf die Figuren 3 und 4, die den Klemmzustand zeigen, ist zu erkennen, dass das Spannelement 11 eingeschraubt ist und sich hierdurch der Klemmhebel 9 um die Schwenkachse 10 verschwenkt hat. Durch das Bereitstellen einer Schneide 13 am auf den Klemmflansch 14 wirkenden Abschnitt des Klemmhebels 9 schneidet dieser in den Klemmflansch 14 ein, sodass ein Formschluss zwischen Klemmhebel 9 und Klemmflansch 14 erzielt wird.

Auf diese Weise ist die Befestigungsklammer 3 mit dem Kabelkanal 2 auch in Längserstreckungsrichtung des Kabelkanals 2 fest verbunden.

Dadurch, dass das Spannelement 11 als Schraube ausgebildet ist, ist dieses selbsthemmend, so dass ein eigenständiges, unbeabsichtigtes Zurückverschwenken des Klemmhebels 9 ohne ein Lösen des Spannelementes 11, nämlich der Schraube, nicht möglich ist.

Um ein Einschneiden des Klemmhebels 9 in den Klemmflansch 14 zu vereinfachen, ist vorgesehen, dass die Stirnseite des Klemmflansches 14 im Wesentlichen zu der Schneide 13 des Klemmhebels 9 weist. Hierfür ist der Klemmflansch 14 gerundet abgewinkelt ausgestaltet. Die Stirnseite des Klemmflansches 14 ist dünn ausgebildet, sodass in dieses mit relativ geringer Kraft eingedrungen werden kann.

Für eine Vormontage der Befestigungsklammer 3 an dem Kabelkanal 2 ist zunächst vorgesehen, dass der Klemmhebel 9 an dem Grundlager 8 in seiner Montageposition gesichert sind. Als lösbare Sicherung ist eine Rastung vorgesehen: An dem Grundlager 8 ist ein Rastvorsprung 18, an dem Klemmhebel 9 eine entsprechende Rastausnehmung 19 vorgesehen.

Mit Blick auf Figur 1: Durch das Halten der Klemmhebel 9 in ihrer Montageposition können diese beim Einsetzen der Befestigungsklammer 3 in den Kabelkanal 2 über den Klemmflansch 14 hinweggedrückt werden. Zur Vereinfachung dieses Vorganges sind die Klemmhebel 9 in ihren zu den Seitenwänden 4, 5 weisenden Endabschnitten 20 dergestalt ausgeformt, dass sie in der Montageposition des Klemmhebels 9 eine Einführschräge bereitstellen, sodass die Enden der Klemmhebel 9 quer zur Längserstreckungsrichtung des Kabelkanals 2 weiter zwischen die Seitenwände 4, 5 in den Aufnahmeraum 7 hineinversetzt sind, als die Klemmflansche 14 in den Aufnahmeraum 7 hineinragen.

Ist die Befestigungsklammer 3 in den Kabelkanal 2 eingesetzt, verrastet diese für eine Vormontage mittels einer grundlagerseitige Rastnase 21 an einer kabelkanalseitigen komplementären Rastleiste 22. Die Klemmhebel 9 müssen hierfür nicht verstellt werden.

Die Rastleiste 22 ist an dem Kabelkanal 2 profilartig vorgesehen. Auch die befestigungsklammerseitige Rastnase 21 ist in Längserstreckungsrichtung des Kabelkanals 2 mit einem konstanten Querschnitt vorgesehen, so dass zwischen Rastleiste 22 und Rastnase 21 eine in Richtung der Längserstreckung des Kabelkanals 2 weisende Verschiebung möglich ist. Die Befestigungsklammer 3 ist somit gegenüber dem Kabelkanal 2 längsverschieblich. Auf diese Weise kann die Befestigungsklammer 3 in einem ersten Schritt an den Kabelkanal 2 vormontiert werden, gegebenenfalls bereits mit weiteren Installationskomponenten, etwa einem Kleinverteiler, ausgestattet werden, final positioniert und dann an dieser finalen Position mittels der Klemmhebel 9, respektive einem Spannen der Klemmhebel 9 mittels der jeweiligen Spannelemente 11, an dem Kabelkanal 2 fixiert werden.

Zum Anschließen weiterer Installationskomponenten, die in den Figuren nicht dargestellt sind, bildet die Befestigungsklammer 3, respektive das Grundlager 8 einen Montagegrund 23. In dem in den Figuren bezeichneten Bereich 23 sind universell einsetzbare Gewindeaufnahmen vorgesehen, wenngleich grundsätzlich an dem gesamten Grundlager 8 eine Befestigung von Installationskomponenten möglich ist.

Um die Aufbauhöhe der Anordnung 1 schlank zu halten, schließt die Befestigungsklammer 3 bündig mit den von dem Boden 6 wegweisenden Enden der Seitenwände 4, 5 ab. Die Klemmhebel 9 ragen in den Aufnahmeraum 7 hinein.

Die Erfindung ist anhand eines Ausführungsbeispiels beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Anordnung
- 2: Kabelkanal
- 3: Befestigungsklammer
- 4, 5: Seitenwände
- 6: Boden
- 7: Aufnahmeraum
- 8: Grundlager
- 9: Klemmhebel
- 10: Schwenkachse
- 11: Spannelement
- 12: Gewindebuchsenabschnitt
- 13: Schneide
- 14: Klemmflansch
- 15: Lagerabschnitt
- 16: Abstützfortsatz
- 17: Steg
- 18: Rastvorsprung
- 19: Rastausnehmung
- 20: Endabschnitt des Klemmhebels
- 21: Rastnase
- 22: Rastleiste
- 23: Montagegrund

## Patentansprüche

1. Anordnung (1) eines zwei Seitenwände (4, 5) und einen Boden (6) aufweisenden Kabelkanals (2) und einer zwischen den Seitenwänden (4, 5) des Kabelkanals (2) an dem Kabelkanal (2) befestigten Befestigungsklammer (3), wobei die Befestigungsklammer (3) einen Montagegrund (23) für weitere Installationskomponenten, etwa einen Kleinverteiler, bildet, wobei die Seitenwände (4, 5) und der Boden (6) des Kabelkanals (2) einen Aufnahmeraum (7) einfasst, in dem in Längserstreckungsrichtung des Kabelkanals (2) führende Leitungen aufnehmbar sind, und einen in diesen Aufnahmeraum (7) hineinragenden Klemmflansch (14) aufweist, wobei die Befestigungsklammer (3) eine Klemme umfasst, die ein gegen den Kabelkanal (2) wirkendes Grundlager (8) und einen gegenüber dem Grundlager (8) beweglich gehaltenen Klemmhebel (9) aufweist, wobei der Klemmhebel (9) durch ein Spannelement (11) von einer Montageposition in eine Klemmposition verstellbar ist, in der der Klemmhebel (9) auf den Klemmflansch (14) wirkt, sodass zwischen Klemmhebel (9) und Klemmflansch (14) ein Kraftschluss vorliegt und die Befestigungsklammer (3) fest mit dem Kabelkanal (2) verbunden ist.

2. Anordnung nach Anspruch 1, **dadurch gekennzeichnet, dass** für eine Vormontage der Befestigungsklammer (3) an dem Kabelkanal (2) die Befestigungsklammer (3) über zumindest eine Rastkomponente verfügt, die mit einer kabelkanalseitigen, komplementären Rastkomponente zusammenwirkt, wobei die geometrische Ausgestaltung der beiden komplementären Rastkomponenten eine gegenseitige Längsverschiebung entlang der Längserstreckungsrichtung des Kabelkanals (2) erlaubt.

3. Anordnung nach einem der Ansprüche 1 oder 2, **dadurch gekennzeichnet, dass** der Klemmhebel (9) im Auslieferungszustand in seiner Montageposition durch eine lösbare Sicherung formschlüssig gegenüber dem Grundlager (8) gehalten ist.

4. Anordnung nach einem der Ansprüche 1 bis 3, **dadurch gekennzeichnet, dass** der Klemmhebel (9) gegenüber dem Grundlager (8) verschwenkbar gehalten ist und zur Verstellung von seiner Montageposition in seine Klemmposition verschwenkt wird.

5. Anordnung nach einem der Ansprüche 1 bis 4, **dadurch gekennzeichnet, dass** das Spannelement (11) jedenfalls in der Klemmposition des Klemmhebels (9) selbsthemmend ist.

6. Anordnung nach einem der Ansprüche 1 bis 5, **dadurch gekennzeichnet, dass** der Klemmhebel (9) in der Klemmposition in den Klemmflansch (14) zur Ausbildung eines Formschlusses eingreift.

7. Anordnung nach einem der Ansprüche 1 bis 6, **dadurch gekennzeichnet, dass** der Montagegrund (23) am Grundlager (8) auf der dem Boden (6) des Kabelkanals (2) abgewandten Seite angeordnet ist und der Klemmhebel (9) auf der den Boden (6) zugewandten Seite der Befestigungsklammer (3) angeordnet ist und den Klemmflansch (14) hintergreift.

8. Anordnung nach einem der Ansprüche 1 bis 7, **dadurch gekennzeichnet, dass** die Befestigungsklammer (3) mit ihrem Montagegrund (23) im Wesentlichen bündig mit dem zu der Öffnung weisenden Ende der Seitenwände (4, 5) des Kabelkanals (2) abschließt oder daraus hervorragt.

9. Anordnung nach einem der Ansprüche 1 bis 8, **dadurch gekennzeichnet, dass** die Befestigungsklammer (3) zwei an ihren gegenüberliegenden, zu den Seitenwänden (4, 5) des Kabelkanals (2) weisenden Enden angeordnete Klemmen aufweist und der Kabelkanal (2) an komplementären Positionen jeweils einen Klemmflansch (14) aufweist.

10. Befestigungsklammer (3) für eine Anordnung (1) nach einem der Ansprüche 1 bis 9, **dadurch gekennzeichnet, dass** die Befestigungsklammer (3) die die Befestigungsklammer (3) betreffenden Merkmale aufweist.
